(19) Europäisches Patentamt
European Patent Office
Office européen des brevets

(11) **EP 3 026 968 A1**

(12) **EUROPEAN PATENT APPLICATION**
published in accordance with Art. 153(4) EPC

(43) Date of publication:
**01.06.2016 Bulletin 2016/22**

(51) Int Cl.:
***H04W 68/00*** (2009.01)

(21) Application number: **13892761.1**

(22) Date of filing: **26.08.2013**

(86) International application number:
**PCT/CN2013/082281**

(87) International publication number:
**WO 2015/027377 (05.03.2015 Gazette 2015/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Huawei Technologies Co., Ltd.**
**Longgang District**
**Shenzhen, Guangdong 518129 (CN)**

(72) Inventors:
• **HU, Shuhui**
  **Shenzhen**
  **Guangdong 518129 (CN)**

• **XIE, Bo**
  **Shenzhen**
  **Guangdong 518129 (CN)**
• **HE, Lang**
  **Shenzhen**
  **Guangdong 518129 (CN)**
• **LIAN, Hai**
  **Shenzhen**
  **Guangdong 518129 (CN)**

(74) Representative: **Goddar, Heinz J.**
**Boehmert & Boehmert**
**Anwaltspartnerschaft mbB**
**Patentanwälte Rechtsanwälte**
**Pettenkoferstrasse 20-22**
**80336 München (DE)**

(54) **COMMUNICATION METHOD, COMMUNICATION DEVICE AND BASE STATION**

(57) The present invention provides a communications method, a communications apparatus, and a base station. According to the method, a base station acquires a start time when a user equipment UE monitors paging information on another network, where a network type of a network on which the UE is located before the start time differs from a network type of the another network, and then, the base station stops scheduling data on the UE in first duration that uses the start time as a starting point, thereby retransmission between the base station and the UE is reduced, and waste of a downlink resource on a network provided by the base station is further reduced.

FIG. 1

**Description**

**TECHNICAL FIELD**

Embodiments of the present invention relate to communications technologies, and in particular, to a communications method, a communications apparatus, and a base station.

**BACKGROUND**

In a current communication process, an operator generally chooses CDMA and LTE hybrid networking to provide a data service and a voice service; for example, an LTE network is chosen to provide a high-speed data service, and a CDMA network is chosen to provide a voice service.

In the prior art, a multi-manner terminal based on a single radio (Single Radio) technology, namely a terminal capable of performing data receiving and sending with one network at a same time, establishes a RRC connection with an LTE network, that is, of receiving or sending data in a RRC activated state, the multi-manner terminal may be periodically switched to a CDMA network to receive a paging message. When the LTE network is in an idle state, the multi-manner terminal not only monitors an LTE paging message in a fixed LTE paging period, but also switches a receiver to a CDMA 1x network in a fixed CDMA 1x paging period, so as to monitor paging.

However, in the prior art, when a UE is in a RRC activated state on the LTE network, in a period of time when the UE leaves the LTE network to monitor the paging message on the CDMA network, an LTE eNB may further schedule an LTE downlink resource for the UE to send data. Yet, because the UE has already left the LTE network at this time, the eNB cannot receive a response from the UE after issuing data to the UE; therefore, a base station may constantly retransmit the data to the UE, thereby causing waste of the LTE downlink resource.

**SUMMARY**

Embodiments of the present invention provide a communications method, a communications apparatus, and a base station, aiming to handle a problem that when a UE of a base station leaves a current network to monitor paging information on another network, the base station may constantly retransmit data to the UE.

According to a first aspect, a communications method is provided and includes:

acquiring, by a base station, a start time when a user equipment UE monitors paging information on another network, where a network type of a network on which the UE is located before the start time differs from a network type of the another network; and

stopping, by the base station, scheduling data on the UE in first duration that uses the start time as a starting point.

In a first possible implementation manner of the first aspect, the acquiring, by a base station, a start time when a user equipment UE monitors paging information on another network includes:

acquiring, by the base station, frame offset of the UE; and
acquiring, by the base station, the start time when the UE monitors the paging information on the another network, according to the frame offset.

With reference to the first aspect, in a second possible implementation manner of the first aspect, the acquiring, by a base station, a start time when a user equipment UE monitors paging information on another network includes at least one of the following manners:

if in first preset duration, the base station has not received channel state information CSI or sounding reference signal SRS sent by the UE, determining that an end time of the first preset duration is the start time when the UE monitors the paging information on the another network; or

if in second preset duration, the base station has not received data sent by the UE in a physical uplink shared information resource PUSCH, determining that an end time of the second preset duration is the start time when the UE monitors the paging information on the another network; or

if in a first preset time, the base station has not received data sent by the UE in a physical uplink shared information resource PUSCH, determining that time of the last time of the first preset time is the start time when the UE monitors the paging information on the another network; or

if in third preset duration, the base station has not received ACK or NACK sent by the UE, determining that an end time of the third preset duration is the start time when the UE monitors the paging information on the another network;

or
if in a second preset time, the base station has not received ACK or NACK sent by the UE, determining that time of the last time of the second preset time is the start time when the UE monitors the paging information on the another network.

With reference to the first possible implementation manner of the first aspect, in a third possible implementation manner of the first aspect, the acquiring, by the base station, frame offset of the UE includes:

receiving, by the base station, an initial context update request message sent by a mobility management entity MME, and the initial context update request message carries the frame offset.

With reference to the first possible implementation manner of the first aspect, in a fourth possible implementation manner of the first aspect, the acquiring, by the base station, frame offset of the UE includes:

sending, by the base station, a frame offset request message to a mobility management entity MME, and the frame offset request message is used to request for the frame offset of the UE; and
receiving, by the base station, a frame offset response message sent by the MME, and the frame offset response message carries the frame offset.

With reference to the first possible implementation manner of the first aspect, in a fifth possible implementation manner of the first aspect, the acquiring, by the base station, frame offset of the UE includes:

sending, by the base station, information of requesting for the frame offset of the UE to a CDMA-LTE interworking function entity IWS; and
receiving, by the base station, the frame offset sent by the IWS.

With reference to the first possible implementation manner of the first aspect, in a sixth possible implementation manner of the first aspect, the acquiring, by the base station, frame offset of the UE includes:

receiving, by the base station, a radio resource control protocol RRC connection update message sent by the UE, and the RRC connection update message carries a frame offset parameter of the UE; or
receiving, by the base station, a paging frame offset response message sent by the UE, where the paging frame offset response message is received by the base station after the base station sends a paging offset request message to the UE, and the paging frame offset response message carries the frame offset of the UE.

With reference to the first aspect or any one of the first to sixth possible implementation manners of the first aspect, in a seventh possible implementation manner of the first aspect, the stopping, by the base station, scheduling data on the UE includes:

caching, by the base station, data that a service gateway SGW sends to the UE;
stopping, by the base station, uplink timing advance measurement on the UE, and skipping sending TA adjustment to the UE;
stopping, by the base station, sending ACK/NACK feedback to the UE; and
stopping, by the base station, receiving ACK/NACK sent by the UE.

With reference to the seventh possible implementation manner of the first aspect, in an eighth possible implementation manner of the first aspect, the stopping, by the base station, scheduling data on the UE further includes:

stopping, by the base station, uplink channel state information CSI detection, sounding reference signal SRS detection, and channel estimation or measured filter processing on the UE; and
stopping, by the base station, scheduling request SR detection.

With reference to the first aspect or any one of the first to eighth possible implementation manners of the first aspect, in a ninth possible implementation manner of the first aspect, after the stopping, by the base station, scheduling data processing on the UE, the method further includes:

if the base station has received the ACK or NACK sent by the UE, determining, by the base station, that the UE returns to a network provided by the base station; or

if the base station has received the data sent by the UE, determining, by the base station, that the UE returns to a network provided by the base station, and the data includes at least one of the SR, CSI or SRS.

With reference to the ninth possible implementation manner of the first aspect, in a tenth possible implementation manner of the first aspect, after the determining, by the base station, that the UE returns to a network provided by the base station, the method further includes:

determining, by the base station, time when the UE monitors the paging information on the another network next time, according to the start time and a paging period.

With reference to the ninth possible implementation manner of the first aspect, in an eleventh possible implementation manner of the first aspect, after the determining, by the base station, that the UE returns to a network provided by the base station, the method further includes:

determining, by the base station, that time when the UE returns to the network provided by the base station is a return time; and
determining, by the base station, time when the UE monitors the paging information provided by the another network next time, according to the return time and the paging period.

According to a second aspect, a communications apparatus is provided and includes:

an acquiring module, configured to obtain a start time when a user equipment UE monitors paging information on another network, where a network type of a network on which the UE is located before the start time differs from a network type of the another network; and
a processing module, configured to stop scheduling data on the UE in a first duration that uses the start time as a starting point.

In a first possible implementation manner of the second aspect, the acquiring module is specifically configured to acquire frame offset of the UE; and
the processing module is further configured to acquire the start time when the UE monitors the paging information on the another network, according to the frame offset.
With reference to the second aspect, in a second possible implementation manner of the second aspect, the acquiring module is specifically configured to determine that, if in first preset duration, the base station has not received channel state information CSI or sounding reference signal SRS sent by the UE, an end time of the first preset duration is the start time when the UE monitors the paging information on the another network; or if in second preset duration, the base station has not received data sent by the UE in a physical uplink shared information resource PUSCH, an end time of the second preset duration is the start time when the UE monitors the paging information on the another network; or if in a first preset time, the base station has not received data sent by the UE in a physical uplink shared information resource PUSCH, time of the last time of the first preset time is the start time when the UE monitors the paging information on the another network; or if in third preset duration, the base station has not received ACK or NACK sent by the UE, an end time of the third preset duration is the start time when the UE monitors the paging information on the another network; or if in a second preset time, the base station has not received ACK or NACK sent by the UE, time of the last time of the second preset time is the start time when the UE monitors the paging information on the another network.
With reference to the first possible implementation manner of the second aspect, in a third possible implementation manner of the second aspect, the acquiring module is specifically configured to receive an initial context update request message sent by a mobility management entity MME, and the initial context update request message carries the frame offset.
With reference to the first possible implementation manner of the second aspect, in a fourth possible implementation of the second aspect, the apparatus further includes a sending module, where:

the sending module is configured to send a frame offset request message to a mobility management entity MME, and the frame offset request message is configured to request for the frame offset of the UE; and
the acquiring module is specifically configured to receive a frame offset response message sent by the MME, and the frame offset acknowledgement message carries the frame offset.

With reference to the first possible implementation manner of the second aspect, in a fifth possible implementation of the second aspect, the apparatus further includes a sending module, where:

the sending module is configured to send information of requesting for the frame offset of the UE to a CDMA-LTE interworking function entity IWS; and

the acquiring module is specifically configured to receive the frame offset sent by the IWS.

With reference to the first possible implementation manner of the second aspect, in a sixth possible implementation manner of the second aspect, the acquiring module is specifically configured to receive a radio resource control protocol RRC connection update message sent by the UE, and the RRC connection update message carries a frame offset parameter of the UE; or receive a paging frame offset response message sent by the UE, where the paging frame offset response message is received by the base station after the base station sends a paging frame offset request message to the UE, and the paging frame offset acknowledgement message carries the frame offset of the UE.

With reference to the second aspect or any one of the first to sixth possible implementation manners of the second aspect, in a seventh possible implementation manner of the second aspect, the processing module is specifically configured to cache data that a service gateway SGW sends to the UE; or stop uplink timing advance measurement on the UE and skip sending TA adjustment to the UE; or stop sending ACK/NACK feedback to the UE, or stop receiving the ACK/NACK sent by the UE.

With reference to the seventh possible implementation manner of the second aspect, in an eighth possible implementation manner of the second aspect, the processing module is further configured to stop uplink channel state information CSI detection, sounding reference signal SRS detection, or channel estimation or measured filter processing on the UE, or stop scheduling request SR detection by the base station.

With reference to the second aspect or any one of the first to eighth possible implementation manners of the second aspect, in a ninth possible implementation manner of the second aspect, the processing module is further configured to receive the ACK or NACK sent by the UE, then the base station determines that the UE returns to a network provided by the base station; or receive data sent by the UE, then the base station determines that the UE returns to a network provided by the base station, and the data includes at least one of the SR, CSI or SRS.

With reference to the ninth possible implementation manner of the second aspect, in a tenth possible implementation manner of the second aspect, the processing module is further configured to determine time when the UE monitors the paging information on the another network next time, according to the start time and a paging period.

With reference to the ninth possible implementation manner of the second aspect, in an eleventh possible implementation manner of the second aspect, the processing module is further configured to determine that time when the UE returns to the network provided by the base station is a return time, and determine time when the UE monitors the paging information provided by the another network next time, according to the return time and the paging period.

According to a third aspect, a base station is provided and includes a transmitter, a receiver, a memory, and a processor that is connected with the transmitter, the receiver and the memory respectively, where the memory stores a group of program code; and the processor is configured to call the program code stored in the memory to execute the method according to the first aspect or any one of the first to eleventh possible implementation manners of the first aspect.

According to a fourth aspect, a base station is provided and includes the apparatus according to the second aspect or any one of the first to eleventh possible implementation manners of the second aspect.

A communications method, communications apparatus and base station are provided in embodiments of the present invention. In the method, a base station acquires a start time when a user equipment UE monitors paging information on another network, where a network type of a network on which the UE is located before the start time differs from a network type of the another network, and then, the base station stops scheduling data on the UE in first duration that uses the start time as a starting point, thereby, retransmission between the base station and the UE is reduced, and waste of a downlink resource on a network provided by the base station is further reduced.

**BRIEF DESCRIPTION OF DRAWINGS**

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.

FIG. 1 is a flowchart of an embodiment of a communications method according to the present invention;

FIG. 2 is a flowchart of another embodiment of a communications method according to the present invention;

FIG. 3 is a flowchart of still another embodiment of a communications method according to the present invention;

FIG. 4 is a schematic structural diagram of an embodiment of a communications apparatus according to the present invention;

FIG. 5 is a schematic structural diagram of another embodiment of a communications apparatus according to the present invention; and
FIG. 6 is a schematic structural diagram of an embodiment of a base station according to the present invention.

## DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

The communications method and communications apparatus provided in embodiments of the present invention may specifically be applied to a process that when, in a communications system, a user equipment UE has established a radio resource control (Radio Resource Control, hereinafter referred to as RRC) protocol connection with a first network, and is in a RRC activated state, that is, the UE performs data transmission with the first network, when the UE leaves the first network to monitor paging information on a second network, data scheduling process on the UE is stopped, where the first network and the second network differ in type; for example, the first network is an LTE network, and the second network is a CDMA network. The communications method provided in the embodiments of the present invention may specifically be executed by the communications apparatus, which may be integrated in a base station, and may be implemented by means of software and/or hardware. That the first network is an LTE network and the second network is a CDMA network is used as an example in the following to describe the embodiments of the present invention in detail.

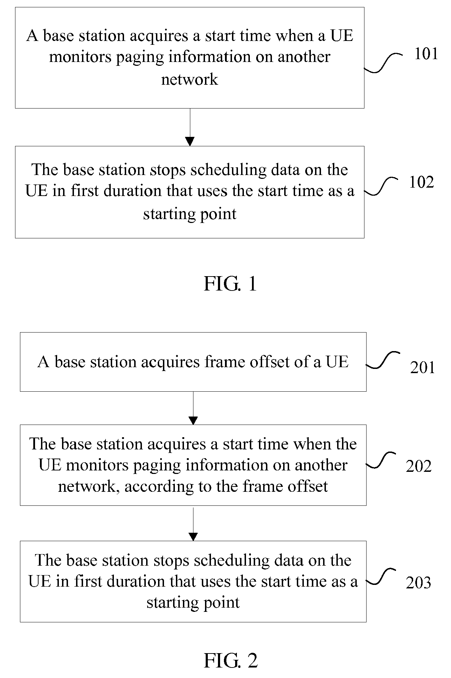

FIG. 1 is a flowchart of an embodiment of a communications method according to the present invention. As shown in FIG. 1, the communications method provided in the embodiment specifically includes the following:

Step 101: A base station acquires a start time when a UE monitors paging information on another network.

It should be noted that a network type of a network on which the UE is located before the start time differs from network type of the another network, and the start time may be a start timeslot when the UE starts to monitor the paging information on the another network.

For example, the UE may periodically leave an LTE network provided by the base station to monitor paging information on a CDMA network, where the CDMA network may be provided by a base station that provides the LTE network, or may be provided by another base station. Specifically, a network type of a network on which the UE is located in first designated duration before the start time differs from a network type of a network on which the UE is located in second designated duration after the start time, where the first designated duration and the second designated duration may be manually set by using the base station; for example, duration when the UE periodically gains access to the LTE network is the first designated duration, and duration when the UE periodically gains access to the CDMA network, that is, to monitor the CDMA network is the second designated duration.

In the embodiment of the present invention, the base station acquires the start time when the UE monitors the paging information on the another network in at least three implementation manners, which may include:

a first implementation manner, where the base station acquires frame offset of the UE; and then, the base station acquires the start time when the UE monitors the paging information on the another network, according to the frame offset;
a second implementation manner, where if in certain duration and/or in a certain preset time, the base station has not received information sent by the UE, the base station determines that the UE is monitoring the paging information on the another network, and time when the UE is monitoring the paging information on the another network is used as a start time when the UE monitors the paging information on the another network this time; and
a third implementation manner, where the base station acquires a start time when the UE monitors the paging information on the another network this time, according to time when the UE monitors the paging information on the another network last time or time returned after the UE monitors the paging information on the another network last time.

Specifically, in the first implementation manner, the base station acquires the frame offset of the UE in at least three implementation scenarios, which include:

a first implementation scenario, where the base station acquires the frame offset of the UE from a mobility management entity (Mobility Management Entity, hereinafter referred to as MME); for example, when the UE has established a RRC connection with the base station, the base station may receive an initial context update request message sent by the MME, where the initial context update request message carries the frame offset; or, the base station sends a frame offset request message to the MME, and the frame offset request message is used to request for the frame offset of the UE, then the base station receives a frame offset response message sent by the MME, where the frame offset response message carries the frame offset. It should be noted that the frame offset may be acquired by the MME through calculation according to an international mobile subscriber identification number (International Mobile Subscriber Identification Number, hereinafter referred to as IMSI) of a terminal;

a second implementation scenario, where the base station acquires the frame offset of the UE from a CDMA-LTE interworking function entity (Interworking solution function, hereinafter referred to as IWS); for example, when the UE has established a RRC connection with the base station, the base station sends to the IWS information of requesting for the frame offset of the UE, and then the base station receives the frame offset sent by the IWS. It should be noted that the frame offset may be acquired by the IWS through calculation according to the IMSI; and

a third implementation scenario, where the base station acquires the frame offset of the UE from the UE; for example, when the UE has established a RRC connection with the base station, the base station receives a RRC connection update message sent by the UE, where the RRC connection update message carries a frame offset parameter of the UE; or the base station receives a paging frame offset response message sent by the UE, where the paging frame offset response message is received by the base station after the base station sends a paging frame offset request message to the UE, and the paging frame offset response message carries the frame offset of the UE. It should be noted that the frame offset may be acquired by the UE through calculation according to the IMSI.

Correspondingly, in any one of the foregoing implementation scenarios, the base station may acquire the start time when the UE monitors the paging information on the another network, according to the frame offset and a paging period.

For example, the base station may determine, according to whether a QPCH channel is configured, whether the UE monitors the paging information on the another network in the quick paging channel, where information about the configured QPCH channel may be manually and statically configured on the base station; if the base station determines that the QPCH channel is configured, it is determined that the UE monitors the paging information on the another network in the quick paging channel, and formula (2) is applied; or, if the base station determines that the QPCH channel is not configured, it is determined that the UE monitors the paging information on the another network in a paging channel, and formula (1) is applied; thereby, the start time when the UE monitors the paging information on the another network is acquired according formula (1) or formula (2).

$$\text{Formula (1): } (T/4 - \text{frame offset}) \bmod (\text{paging period}) = 0, \text{ where}$$

T is the start time when the UE monitors the paging information on the another network, that is, time when the UE starts to monitor the paging information on the another network; and
the paging period is a paging period of the terminal.

$$\text{Formula (2): } ((T+5)/4 - \text{frame offset}) \bmod (\text{paging period}) = 0, \text{ where}$$

T is the start time when the UE monitors the paging information on the another network, that is, the time when the UE starts to monitor the paging information on the another network; and
the paging period is the paging period of the terminal.

Specifically, in the second implementation manner, the base station may determine that the UE is monitoring the paging information on the another network, by using at least one of the following manners, which include:

manner 1: in first preset duration, the base station has not received channel state information (Channel status Indicator, hereinafter referred to as CSI) or sounding reference signal (Sounding Reference Signal, hereinafter referred to as SRS) sent by the UE;

manner 2: in second preset duration or in a first preset times, the base station has not received data sent by the UE in a physical uplink shared channel (Physical Uplink Share Channel, hereinafter referred to as PUSCH); and

manner 3: in third preset duration or in a second preset time, the base station has not received acknowledgement or negative acknowledgement (Negative Acknowledgement, hereinafter referred to as NACK) response sent by the UE; for example, the base station sends a data packet to the UE, but does not receive ACK information sent by the UE after the UE successfully demodulates the data packet; or, the base station sends a data packet to the UE, but does not receive NACK information sent by the UE after the UE fails to demodulate the data packet.

Correspondingly, the base station determines that the time when the UE monitors the paging information on the another network is the foregoing start time.

Specifically, in the third implementation manner, the base station may acquire the start time when the UE monitors the paging information on the another network, according to time when the UE monitors the paging information on the another network last time or time returned after the UE monitors the paging information on the another network last time.

For example, the base station may acquire the start time when the UE monitors the paging information on the another network according to the time when the UE monitors the paging information on the another network last time and the paging period, that is, $T_{leave(n)} = T_{leave(n-1)} + P_{period}$ is applied, where $T_{leave(n)}$ is the start time when the UE monitors the paging information on the another network.

It should be noted that, $P_{period}$ is a paging period, which may be set in the base station; or, a time interval when the UE monitors the paging information on the another network is determined according to the first or second implementation manner, that is, the time interval is used as the paging period.

$T_{leave(n-1)}$ is time when the UE monitors the paging information on the another network and is determined by the base station last time, where the base station may determine, according to the first or second implementation manner, time when the UE monitors the paging information on the another network last time.

Optionally, the base station may acquire, according to time returned after the UE monitors the paging information on the another network last time and a paging period, or by applying $T_{leave(n)} = T_{enter(n-1)} + P_{period} - P_{search}$, the start time when the UE monitors the paging information on the another network, where $T_{leave(n)}$ is the start time when the UE monitors the paging information on the another network.

It should be noted that $P_{period}$ is the paging period, which may be set in the base station; or, a time interval when the UE monitors the paging information on the another network is determined according to the first or second implementation manner, that is, the time interval is used as the paging period.

$P_{search}$ is time when the UE leaves a network provided by the LTE to search for another network, for example, the CDMA network, and may determine, according to time of monitoring the paging information on the another network last time and time of returning to the LTE network, time when the UE leaves the network provided by the LTE and starts to search for the another network.

$T_{leave(n-1)}$ is time when the base station determines that the UE monitors the paging information on the another network, where the base station may determine, according to the first or second implementation manner, the time when the UE monitors the paging information on the another network last time.

Step 102: The base station stops scheduling data on the UE in the first duration that uses the start time as a starting point.

In this embodiment, the base station may stop scheduling data on the UE in at least one of the following manners, which are specifically:

a first manner: the base station caches data that a service gateway SGW sends to the UE;
a second manner: the base station stops uplink timing advance measurement on the UE, and does not send TA adjustment to the UE;
a third manner: the base station stops sending ACK or NACK feedback to the UE, that is, for uplink data that the base station has scheduled to the UE previously, the base station stops sending the ACK/NACK feedback to the UE; and
a fourth manner: the base station stops receiving ACK/NACK sent by the UE, that is, for downlink data that the base station has scheduled, the base station stops receiving the ACK/NACK sent by the UE.

Further, based on the foregoing embodiment, the manners in which the base station stops scheduling data on the UE may further include:

a fifth manner: the base station stops uplink CSI detection, SRS detection, channel estimation or measured filter processing on the UE; and
a sixth manner: the base station does not perform scheduling request (Scheduling Request, hereinafter referred to as SR) detection.

According to a communications method provided in an embodiment of the present invention, a base station acquires a start time when a user equipment UE monitors paging information on another network, where a network type of a network on which the UE is located before the start time differs from a network type of the another network, and then, the base station stops scheduling data on the UE in first duration that uses the start time as a starting point, thereby, retransmission between the base station and the UE is reduced, and waste of a downlink resource on a network provided by the base station is further reduced.

Further, based on the foregoing embodiment, after step 101 that the base station stops scheduling data processing on the UE, the method may further include:

if the base station has received ACK or NACK sent by the UE, the base station determines that the UE returns to a network provided by the base station; or

if the base station has received data sent by the UE, the base station determines that the UE returns to a network provided by the base station, where the data includes at least one of the SR, CSI or SRS.

FIG. 2 is a flowchart of another embodiment of a communications method according to the present invention. As shown in FIG. 2, the communications method provided in the embodiment specifically includes the following:

Step 201: A base station acquires frame offset of a UE.

Specifically, the base station acquires the frame offset of the UE in at least three implementation scenarios, which include:

A first implementation scenario, where the base station acquires the frame offset of the UE from an MME; for example, when the UE has established a RRC connection with the base station, the base station may receive an initial context update request message sent by the MME, where the initial context update request message carries the frame offset; or, the base station sends a frame offset request message to the MME, and the frame offset request message is used to request for the frame offset of the UE, and then the base station receives a frame offset response message sent by the MME, where the frame offset response message carries the frame offset.

It should be noted that the frame offset that the MME sends to the base station may be frame offset acquired by the MME through calculation according to an IMSI of the UE.

A second implementation scenario, where the base station acquires the frame offset of the UE from an IWS; for example, when the UE has established a RRC connection with the base station, the base station sends an uplink tunnel message to the MME, so that the MME sends air interface request information to the IWS, where the uplink tunnel message is used to request for the frame offset of the UE; and then, the IWS sends information corresponding to the air interface information to the MME, so that the MME sends a downlink tunnel message to the base station, where the downlink tunnel message carries a frame offset parameter; and further, the downlink tunnel message also carries a paging period.

It should be noted that the frame offset that the IWS sends to the base station may be frame offset acquired by the IWS through calculation according to the IMSI of the UE.

A third implementation scenario, where the base station acquires the frame offset of the UE from the UE; for example, when the UE has established a RRC connection with the base station, the base station receives a RRC connection update message sent by the UE, where the RRC connection update message carries a frame offset parameter of the UE; or the base station receives a paging frame offset response message sent by the UE, where the paging frame offset response message is received by the base station after the base station sends a paging frame offset request message to the UE, and the paging frame offset response message carries the frame offset of the UE.

It should be noted that the frame offset that the UE sends to the base station may be frame offset acquired by the UE through calculation according to the IMSI of the UE.

Step 202: The base station acquires a start time when the UE monitors paging information on another network.

In this embodiment of the present invention, in any one of the foregoing implementation scenarios, the base station may acquire, according to the frame offset and a paging period, the start time when the UE monitors the paging information on the another network or time when the UE starts to monitor the paging information on the another network, where the paging period may be acquired by the base station by the UE, the MME or the IWS, or may be set on the base station.

Further, the base station may further determine, according to whether a QPCH channel is configured, whether the UE monitors the paging information on the another network in a quick paging channel, where information about the configured QPCH channel may be manually and statically configured on an eNB; if the base station determines that the QPCH channel is configured, the base station determines that the UE monitors the paging information on the another network in the quick paging channel, and formula (2) is applied; or, if the base station determines that the QPCH channel is not configured, it is determined that the UE monitors the paging information on the another network in a paging channel, and formula (1) is applied; thereby, the start time when the UE monitors the paging information on the another network is acquired according formula (1) or formula (2).

Formula (1): (T/4-frame offset) mod (paging period) = 0, where

T is the start time when the UE monitors the paging information on the another network, that is, time when the UE starts to monitor the paging information on the another network; and
the paging period is a paging period of a terminal.

Formula (2): (T+5)/4-frame offset) mod (paging period) = 0, where T is the start

where T is the start time when the UE monitors the paging information on the another network, that is, time when the UE starts to monitor the paging information on the another network; and
the paging period is the paging period of the terminal.

Step 203: The base station stops scheduling data on the UE in first duration that uses the start time as a starting point.
In this embodiment, the first duration is a preset value of a relevant person skilled in the art, and a specific value of the first duration is not limited herein.
Specifically, the base station may stop scheduling data on the UE in at least one of the following manners, which are specifically:

a first manner: the base station caches data that a service gateway SGW sends to the UE;
a second manner: the base station stops uplink timing advance measurement on the UE, and does not send TA adjustment to the UE;
a third manner: for uplink data that the eNB has scheduled previously, the base station stops sending ACK/NACK feedback to the UE;
a fourth manner: for downlink data that the eNB has scheduled the base station stops receiving ACK/NACK;
a fifth manner: the base station stops uplink CSI/SRS detection, channel estimation, and measured filter processing on the UE; and
a sixth manner: the base station stops SR detection.

According to a communications method provided in an embodiment of the present invention, a base station acquires frame offset of a UE, and then acquires, according to the frame offset, a start time when the UE monitors paging information on another network, thereby, retransmission between the base station and the UE is reduced, and waste of a downlink resource on a network provided by the base station is further reduced.

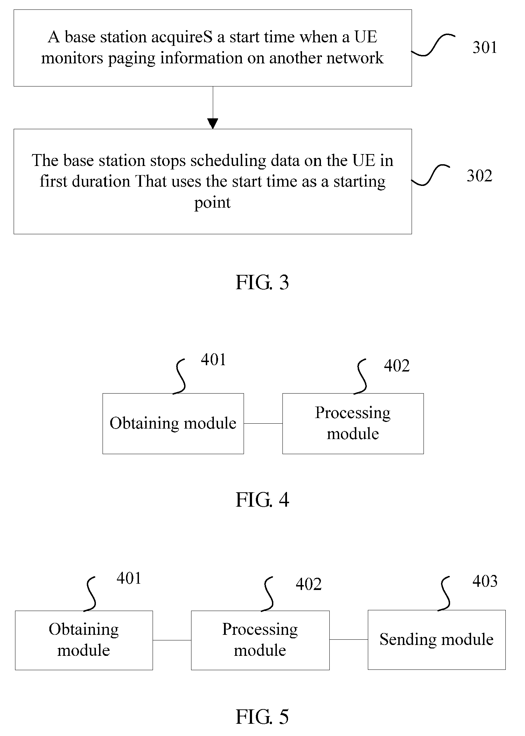

FIG. 3 is a flowchart of still another embodiment of a communications method according to the present invention. As shown in FIG. 3, the communications method provided in the embodiment may specifically include the following:

Step 301: A base station acquires a start time when a UE monitors paging information on another network.
Specifically, the base station acquires the start time when the UE monitors the paging information on the another network in at least one of the following manners:

manner 1: if in first preset duration, the base station has not received channel state information CSI or sounding reference signal SRS sent by the UE, it is determined that an end time of the first preset duration is the start time when the UE monitors the paging information on the another network; or
manner 2: if in second preset duration, the base station has not received data sent by the UE in a physical uplink shared channel PUSCH, it is determined that an end time of the second preset duration is the start time when the UE monitors the paging information on the another network;
if in a first preset time, the base station has not received data sent by the UE in the physical uplink shared channel PUSCH, it is determined that time of the last time of the first preset time is the start time when the UE monitors the paging information on the another network;
for example, if uplink data that the base station has scheduled to the UE, or scheduling on uplink data that the base station actively performs to the UE is in the second preset duration or in the first preset time, the base station has not received the data sent by the UE in the PUSCH;
manner 3: if in third preset duration, the base station has not received ACK or NACK sent by the UE, it is determined that an end time of the third preset duration is the start time when the UE monitors the paging information on the another network; or

if in a second preset time, the base station has not received ACK or NACK sent by the UE, it is determined that time of the last time of the second preset time is the start time when the UE monitors the paging information on the another network.

For example, when the base station has scheduled the downlink data to the UE, or when the base station actively schedules downlink data to the UE, if it is in the third preset duration or in the second preset time, the base station has not received the ACK or NACK sent by the UE.

It should be noted that the base station sends a data packet to the UE, and may receive ACK information sent by the UE after the UE successfully demodulates the data packet; or the base station sends a data packet to the UE, and may receive NACK information sent by the UE after the UE fails to demodulate the data packet. If the base station has not received any ACK/NACK feedback of the UE at a specified time after performing downlink scheduling, or the base station has not received any uplink data of the UE at a specified time after performing uplink scheduling, this phenomenon is discontinuous transmission (Discontinuous Transmission, hereinafter referred to as DTX) phenomenon. Then, the base station may determine, according to occurrence of the DTX phenomenon, information that the UE is monitoring the paging information on the another network.

Step 302: The base station stops scheduling data on the UE in the first duration that uses the start time as a starting point.

In this embodiment, the base station may stop scheduling data on the UE in at least one of the following manners, which are specifically:

a first manner: the base station caches data that a service gateway SGW sends to the UE;
a second manner: the base station stops uplink timing advance measurement on the UE, and does not send TA adjustment to the UE;
a third manner: for uplink data that the base station has scheduled previously, the base station stops sending ACK/NACK feedback to the UE; and
a fourth manner: for downlink data that the base station has scheduled, the base station stops receiving ACK/NACK.

Further, based on the foregoing embodiment, after the first duration when the base station stops scheduling data on the UE, if the base station receives the ACK or NACK sent by the UE, the base station determines that the UE returns to the network provided by the base station; or, if the base station receives the data sent by the UE, the base station determines that the UE returns to the network provided by the base station, where the data includes at least one of the SR, CSI or SRS, and the base station performs data scheduling on the UE.

According to a communications method provided in an embodiment of the present invention, a base station acquires first information, where the first information is information that a UE is monitoring paging information on another network, and then the base station determines that time of acquiring the first information is a start time when the UE monitors the paging information on the another network, thereby, retransmission between the base station and the UE is reduced, and waste of a downlink resource on a network provided by the base station is further reduced.

Based on the foregoing embodiment, after the base station determines that the UE returns to the network provided by the base station, the method may further include:

the base station determines time when the UE monitors the paging information on the another network next time, according to the start time and a paging period.

For example, the base station may determine, according to the start time and the paging period of the UE, that is, by applying $T_{leave(n+1)} = T_{leave(n)} + P_{period}$, time when the UE monitors the paging information on the another network next time, where $T_{leave(n+1)}$ is the time when the UE monitors the paging information on the another network next time.

It should be noted that, $P_{period}$ is the paging period, which may be set in the base station; or, a time interval when the UE monitors the paging information on the another network is determined according to the first or second implementation manner, that is, the time interval is used as the paging period.

$T_{leave(n)}$ is the start time when the UE monitors the paging information on the another network and is determined by the base station, where the base station may determine the start time when the UE monitors the paging information on the another network, according to the implementation manner in any one of the foregoing embodiments.

Optionally, based on the foregoing embodiment, after the base station determines that the UE returns to the network provided by the base station, the method may further include:

the base station determines that time when the UE returns to the network provided by the base station is a return time; and

the base station determines time when the UE monitors the paging information on the another network next time, according to the return time and the paging period.

For example, the base station may determine, according to the return time and the paging period, that is, by applying $T_{leave(n+1)} = T_{enter(n)} + P_{period} - P_{search}$, the time when the UE monitors the paging information on the another network next time, where $T_{leave(n+1)}$ is the time when the UE monitors the paging information on the another network next time.

It should be noted that $P_{period}$ is the paging period, which may be set in the base station; or, a time interval when the UE monitors the paging information on the another network is determined according to the first or second implementation manner, and the time interval is used as the paging period.

$P_{search}$ is time when the UE leaves the network provided by the LTE and starts to search for the paging information on the another network.

$T_{leave(n)}$ is the start time when the UE monitors the paging information on the another network and is determined by the base station, where the base station may determine the start time when the UE monitors the paging information on the another network, according to the implementation manner in any one of the foregoing embodiments.

FIG. 4 is a schematic structural diagram of an embodiment of a communications apparatus according to the present invention. As shown in FIG. 4, the communications apparatus includes an acquiring module 401 and a processing module 402, where

the acquiring module 401 is configured to acquire a start time when a user equipment UE monitors paging information on another network, where a network type of a network on which the UE is located before the start time differs from a network type of the another network; and

a processing module 402 is configured to stop scheduling data on the UE in first duration that uses the start time as a starting point.

According to a communications apparatus provided in an embodiment of the present invention, a base station acquires a start time when a user equipment UE monitors paging information on another network, where a network type of a network on which the UE is located before the start time differs from a network type of the another network, and then, the base station stops scheduling data on the UE in first duration that uses the start time as a starting point, thereby, retransmission between the base station and the UE is reduced, and waste of a downlink resource on a network provided by the base station is further reduced.

Based on the foregoing embodiment, the acquiring module 401 is specifically configured to acquire frame offset of the UE; and

the processing module 402 is further configured to obtain the start time when the UE monitors the paging information on the another network, according to the frame offset.

Optionally, based on the foregoing embodiment, the acquiring module 401 and an acquiring module are specifically configured to determine that, if in first preset duration, the base station has not received channel state information CSI or sounding reference signal SRS sent by the UE, it is determined that an end time of the first preset duration is the start time when the UE monitors the paging information on the another network; or if in second preset duration, the base station has not received data sent by the UE in a physical uplink shared channel PUSCH, it is determined that an end time of the second preset duration is the start time when the UE monitors the paging information on the another network; or if in a first preset time, the base station has not received data sent by the UE in a physical uplink shared channel PUSCH, it is determined that time of the last time of the first preset time is the start time when the UE monitors the paging information on the another network; or if the base station has not received ACK or NACK sent by the UE in third preset duration, it is determined that an end time of the third preset duration is the start time when the UE monitors the paging information on the another network; or if in a second preset time, the base station has not received ACK or NACK sent by the UE, it is determined that time of the last time of the second preset time is the start time when the UE monitors the paging information on the another network.

The processing module 402 is further configured to determine that time of acquiring first information is the start time when the UE monitors the paging information on the another network.

Further, based on the foregoing embodiment, the acquiring module 401 is specifically configured to receive an initial context update request message sent by a mobility management entity MME, where the initial context update request message carries the frame offset.

FIG. 5 is a schematic structural diagram of another embodiment of a communications apparatus according to the present invention. Based on the foregoing embodiment, the communications apparatus shown in FIG. 5 may further include an sending module 403.

The sending module 403 is configured to send a frame offset request message to the mobility management entity MME, where the frame offset request message is configured to request for the frame offset of the UE; and

the acquiring module 401 is specifically configured to receive a frame offset response message sent by the MME, where the frame offset response message carries the frame offset.

Optionally, based on the foregoing embodiment, the apparatus may further include a sending module, where the sending module 403 is configured to send information of requesting for the frame offset of the UE to a CDMA-LTE interworking function entity IWS; and
the acquiring module 401 is specifically configured to receive the frame offset sent by the IWS.

Optionally, based on the foregoing embodiment, the acquiring module 401 is specifically configured to receive a radio resource control protocol RRC connection update message sent by the UE, where the RRC connection update message carries a frame offset parameter of the UE, or receive a paging frame offset response message sent by the UE, where the paging frame offset response message is received by the base station after the base station sends a paging frame offset request message to the UE, and the paging frame offset response message carries the frame offset of the UE.

Further, based on the foregoing embodiment, the processing module 402 is specifically configured to cache data that a service gateway SGW sends to the UE, or stop uplink timing advance measurement on the UE and not send TA adjustment to the UE, or stop sending ACK/NACK feedback to the UE, or stop receiving ACK/NACK sent by the UE.

Based on the foregoing embodiment, the processing module 402 is further configured to stop uplink channel state information CSI detection, sounding reference signal SRS detection, channel estimation or measured filter processing on the UE, or stop scheduling request SR detection by the base station.

Further, based on the foregoing embodiment, the processing module is configured to receive ACK or NACK sent by the UE, so that the base station determines that the UE returns to a network provided by the base station, or receive data sent by the UE, then the base station determines that the UE returns to the network provided by the base station, where the data includes at least one of the SR, CSI or SRS.

Based on the foregoing embodiment, the processing module 402 is further configured to determine time when the UE monitors the paging information on the another network next time, according to the start time and a paging period.

Based on the foregoing embodiment, the processing module 402 is further configured to determine that time when the UE returns to the network provided by the base station is a return time, and determines, according to the return time and the paging period, time when the UE monitors the paging information provided by the another network next time.

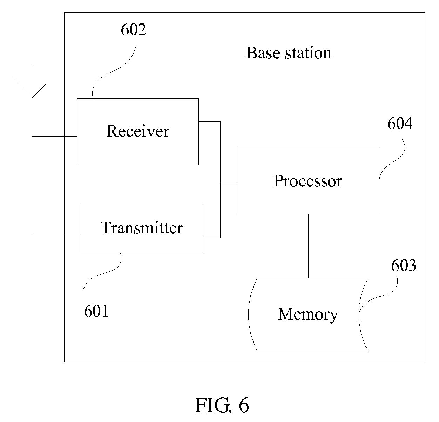

FIG. 6 is a schematic structural diagram of an embodiment of a base station according to the present invention. As shown in FIG. 6, the base station includes a transmitter 601, a receiver 602, a memory 603, and a processor 604 connected with the receiver 602 and the memory 603 respectively, where the memory 603 stores a group of program code; and the processor 604 is configured to call program code stored in the memory to execute the foregoing method embodiments.

An embodiment of the base station reduces retransmission between a base station and a UE, thereby reducing waste of a downlink resource on a network provided by the base station.

An embodiment of the present invention provides a base station, including any one of the foregoing communications apparatus as shown in FIG. 4 or FIG. 5.

An embodiment of the base station reduces, retransmission between a base station and a UE, thereby reducing waste of a downlink resource on a network provided by the base station.

Persons of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disc, or an optical disc.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

**Claims**

1. A communications method, comprising:

   acquiring, by a base station, a start time when a user equipment UE monitors paging information on another network, wherein a network type of a network on which the UE is located before the start time differs from a network type of the another network; and
   stopping, by the base station, scheduling data on the UE in first duration that uses the start time as a starting point.

2. The method according to claim 1, wherein the acquiring, by a base station, a start time when a user equipment UE monitors paging information on another network comprises:

acquiring, by the base station, frame offset of the UE; and
acquiring, by the base station, the start time when the UE monitors the paging information on the another network, according to the frame offset.

3. The method according to claim 1, wherein the acquiring, by a base station, a start time when a user equipment UE monitors paging information on another network comprises at least one of the following manners:

if in first preset duration, the base station has not received channel state information CSI or a sounding reference signal SRS sent by the UE, determining that an end time of the first preset duration is the start time when the UE monitors the paging information on the another network; or
if in second preset duration, the base station has not received data sent by the UE in a physical uplink shared information resource PUSCH, determining that an end time of the second preset duration is the start time when the UE monitors the paging information on the another network; or
if in a first preset time, the base station has not received data sent by the UE in a physical uplink shared information resource PUSCH, determining that time of the last time of the first preset time is the start time when the UE monitors the paging information on the another network; or
if in third preset duration, the base station has not received ACK or NACK sent by the UE, determining that an end time of the third preset duration is the start time when the UE monitors the paging information on the another network; or
if in a second preset time, the base station has not received ACK or NACK sent by the UE, determining that time of the last time of the second preset time is the start time when the UE monitors the paging information on the another network.

4. The method according to claim 2, wherein the acquiring, by the base station, frame offset of the UE comprises:

receiving, by the base station, an initial context update request message sent by a mobility management entity MME, and the initial context update request message carries the frame offset.

5. The method according to claim 2, wherein the acquiring, by the base station, frame offset of the UE comprises:

sending, by the base station, a frame offset request message to a mobility management entity MME, and the frame offset request message is used to request for the frame offset of the UE; and
receiving, by the base station, a frame offset response message sent by the MME, and the frame offset response message carries the frame offset.

6. The method according to claim 2, wherein the acquiring, by the base station, frame offset of the UE comprises:

sending, by the base station, information of requesting for the frame offset of the UE to a CDMA-LTE interworking function entity IWS; and
receiving, by the base station, frame offset sent by the IWS.

7. The method according to claim 2, wherein the acquiring, by the base station, frame offset of the UE comprises:

receiving, by the base station, a radio resource control protocol RRC connection update message sent by the UE, and the RRC connection update message carries a frame offset parameter of the UE; or
receiving, by the base station, a paging frame offset response message sent by the UE, wherein the paging frame offset response message is received by the base station after the base station sends a paging offset request message to the UE, and the paging frame offset response message carries the frame offset of the UE.

8. The method according to any one of claims 1 to 7, wherein the stopping, by the base station, scheduling data on the UE comprises:

caching, by the base station, data that a service gateway SGW sends to the UE;
stopping, by the base station, uplink timing advance measurement on the UE, and skipping sending TA adjustment to the UE;
stopping, by the base station, sending ACK/NACK feedback to the UE; and

stopping, by the base station, receiving ACK/NACK sent by the UE.

9. The method according to claim 8, wherein the stopping, by the base station, scheduling data on the UE further comprises:

stopping, by the base station, uplink channel state information CSI detection, sounding reference signal SRS detection, and channel estimation or measured filter processing on the UE; and
stopping, by the base station, scheduling request SR detection.

10. The method according to any one of claims 1 to 9, wherein after the stopping, by the base station, scheduling data on the UE, further comprising:

if the base station has received the ACK or NACK sent by the UE, determining, by the base station, that the UE returns to a network provided by the base station; or
if the base station has received the data sent by the UE, determining, by the base station, that the UE returns to a network provided by the base station, and the data comprises at least one of the SR, CSI or SRS.

11. The method according to claim 10, after determining, by the base station, that the UE returns to a network provided by the base station, further comprising:

determining, by the base station, time when the UE monitors the paging information on the another network next time, according to the start time and a paging period.

12. The method according to claim 10, after determining, by the base station, that the UE returns to a network provided by the base station, further comprising:

determining, by the base station, that time when the UE returns to the network provided by the base station is a return time; and
determining, by the base station, time when the UE monitors the paging information provided by the another network next time, according to the return time and the paging period.

13. A communications apparatus, comprising:

an acquiring module, configured to acquire a start time when a user equipment UE monitors paging information on another network, wherein a network type of a network on which the UE is located before the start time differs from a network type of the another network; and
a processing module, configured to stop scheduling data on the UE in first duration that uses the start time as a starting point.

14. The apparatus according to claim 13, wherein:

the acquiring module is specifically configured to acquire frame offset of the UE; and
the processing module is further configured to obtain the start time when the UE monitors the paging information on the another network, according to the frame offset.

15. The apparatus according to claim 13, wherein the acquiring module is specifically configured to determine that, if in first preset duration, the base station has not received channel state information CSI or sounding reference signal SRS sent by the UE, an end time of the first preset duration is the start time when the UE monitors the paging information on the another network; or if in second preset duration, the base station has not received data sent by the UE in a physical uplink shared information resource PUSCH, an end time of the second preset duration is the start time when the UE monitors the paging information on the another network; or if in a first preset time, the base station has not received data sent by the UE in a physical uplink shared information resource PUSCH, time of the last time of the first preset time is the start time when the UE monitors the paging information on the another network; or if in third preset duration, the base station has not received ACK or NACK sent by the UE, an end time of the third preset duration is the start time when the UE monitors the paging information on the another network; or if in a second preset time, the base station has not received ACK or NACK sent by the UE, time of the last time of the second preset time is the start time when the UE monitors the paging information on the another network.

**16.** The apparatus according to claim 14, wherein the acquiring module is specifically configured to receive an initial context update request message sent by a mobility management entity MME, and the initial context update request message carries the frame offset.

**17.** The apparatus according to claim 14, further comprising a sending module, wherein:

the sending module is configured to send a frame offset request message to a mobility management entity MME, and the frame offset request message is configured to request for the frame offset of the UE; and
the acquiring module is specifically configured to receive a frame offset response message sent by the MME, and the frame offset acknowledgement message carries the frame offset.

**18.** The apparatus according to claim 14, further comprising a sending module, wherein:

the sending module is configured to send information of requesting for the frame offset of the UE to a CDMA-LTE interworking function entity IWS; and
the acquiring module is specifically configured to receive the frame offset sent by the IWS.

**19.** The apparatus according to claim 14, wherein the acquiring module is specifically configured to receive a radio resource control protocol RRC connection update message sent by the UE, and the RRC connection update message carries a frame offset parameter of the UE; or receive a paging frame offset response message sent by the UE, wherein the paging frame offset response message is received by the base station after the base station sends a paging frame offset request message to the UE, and the paging frame offset acknowledgement message carries the frame offset of the UE.

**20.** The apparatus according to any one of claims 13 to 19, wherein the processing module is specifically configured to cache data that a service gateway SGW sends to the UE; or stop uplink timing advance measurement on the UE and skip sending TA adjustment to the UE, or stop sending ACK/NACK feedback to the UE; or stop receiving ACK/NACK sent by the UE.

**21.** The apparatus according to claim 20, wherein the processing module is further configured to stop channel state information CSI detection, sounding reference signal SRS detection, or channel estimation or measured filter processing on the UE; or stop scheduling request SR detection by the base station.

**22.** The apparatus according to any one of claims 13 to 21, wherein the processing module is further configured to receive the ACK or NACK sent by the UE, then the base station determines that the UE returns to a network provided by the base station; or receive data sent by the UE, then the base station determines that the UE returns to the network provided by the base station, and the data comprises at least one of the SR, CSI or SRS.

**23.** The apparatus according to claim 22, wherein the processing module is further configured to determine time when the UE monitors the paging information on the another network next time, according to the start time and a paging period.

**24.** The apparatus according to claim 22, wherein the processing module is further configured to determine that time when the UE returns to the network provided by the base station is a return time, and determine time when the UE monitors the paging information provided by the another network next time, according to the return time and the paging period.

**25.** A base station, comprising a transmitter, a receiver, a memory, and a processor that is connected with the transmitter, the receiver and the memory respectively, wherein the memory stores a group of program code; and the processor is configured to call the program code stored in the memory to execute the method according to claims 1 to 12.

**26.** A base station, comprising the apparatus according to any one of claims 13 to 24.

A base station acquires a start time when a UE monitors paging information on another network  —⌒ 101

↓

The base station stops scheduling data on the UE in first duration that uses the start time as a starting point  —⌒ 102

FIG. 1

A base station acquires frame offset of a UE  —⌒ 201

↓

The base station acquires a start time when the UE monitors paging information on another network, according to the frame offset  —⌒ 202

↓

The base station stops scheduling data on the UE in first duration that uses the start time as a starting point  —⌒ 203

FIG. 2

A base station acquireS a start time when a UE monitors paging information on another network ⟩⟩ 301

↓

The base station stops scheduling data on the UE in first duration That uses the start time as a starting point ⟩⟩ 302

FIG. 3

401 402

| Obtaining module | Processing module |

FIG. 4

401 402 403

| Obtaining module | Processing module | Sending module |

FIG. 5

FIG. 6

# INTERNATIONAL SEARCH REPORT

| International application No. |
| --- |
| **PCT/CN2013/082281** |

### A. CLASSIFICATION OF SUBJECT MATTER

H04W 68/00 (2009.01) i

According to International Patent Classification (IPC) or to both national classification and IPC

### B. FIELDS SEARCHED

Minimum documentation searched (classification system followed by classification symbols)

IPC: H04W; H04Q; H04L

Documentation searched other than minimum documentation to the extent that such documents are included in the fields searched

Electronic data base consulted during the international search (name of data base and, where practicable, search terms used)

CNPAT, EPODOC, WPI, GOOGLE, 3GPP, IEEE: paging, retransmission, multi-mode, dual-mode, conflict, listen, RAT, LTE, CDMA

### C. DOCUMENTS CONSIDERED TO BE RELEVANT

| Category* | Citation of document, with indication, where appropriate, of the relevant passages | Relevant to claim No. |
| --- | --- | --- |
| X | CN 102388662 A (QUALCOMM INC.), 21 March 2012 (21.03.2012), abstract, description, paragraphs [0036]-[0064], and figures 7-12 | 1-26 |
| A | US 2012236709 A1 (QUALCOMM, INCORPORATED), 20 September 2012 (20.09.2012), the whole document | 1-26 |
| A | CN 1937830 A (SAMSUNG ELECTRONICS CO., LTD. et al.), 28 March 2007 (28.03.2007), the whole document | 1-26 |

☐ Further documents are listed in the continuation of Box C.    ☒ See patent family annex.

| *   Special categories of cited documents: | "T"   later document published after the international filing date or priority date and not in conflict with the application but cited to understand the principle or theory underlying the invention |
| --- | --- |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| 12 May 2014 (12.05.2014) | **30 May 2014 (30.05.2014)** |

| Name and mailing address of the ISA/CN: <br> State Intellectual Property Office of the P. R. China <br> No. 6, Xitucheng Road, Jimenqiao <br> Haidian District, Beijing 100088, China <br> Facsimile No.: (86-10) 62019451 | Authorized officer <br>          **LAI, Yi** <br> Telephone No.: (86-10) **62413077** |

Form PCT/ISA/210 (second sheet) (July 2009)

## INTERNATIONAL SEARCH REPORT
### Information on patent family members

International application No.

**PCT/CN2013/082281**

| Patent Documents referred in the Report | Publication Date | Patent Family | Publication Date |
|---|---|---|---|
| CN 102388662 A | 21 March 2012 | TW 201218843 A | 01 May 2012 |
| | | US 2011280221 A1 | 17 November 2011 |
| | | WO 2011146534 A1 | 24 November 2011 |
| US 2012236709 A1 | 20 September 2012 | EP 2687060 A1 | 22 January 2014 |
| | | KR 20130136539 A | 12 December 2013 |
| | | WO 2012125967 A1 | 20 September 2012 |
| | | CN 103430616 A | 04 December 2013 |
| CN 1937830 A | 28 March 2007 | EP 1935118 A1 | 25 June 2008 |
| | | WO 2007035061 A1 | 29 March 2007 |
| | | US 2009022108 A1 | 22 January 2009 |
| | | JP 2009517894 A | 30 April 2009 |
| | | CN 1937807 A | 28 March 2007 |

Form PCT/ISA/210 (patent family annex) (July 2009)